(19) **Europäisches Patentamt**

**European Patent Office**

**Office européen des brevets**

(11) **EP 0 945 782 B1**

(12) **EUROPEAN PATENT SPECIFICATION**

(45) Date of publication and mention
of the grant of the patent:
**06.05.2004 Bulletin 2004/19**

(51) Int Cl.⁷: **G06F 9/30**, G06F 9/318

(21) Application number: **98105601.3**

(22) Date of filing: **27.03.1998**

(54) **System for converting instructions, and method thereto**

System und Verfahren zur Umwandlung von Befehlen

Système et procédé de conversion d'instructions

(84) Designated Contracting States:
**DE FR GB IT**

(43) Date of publication of application:
**29.09.1999 Bulletin 1999/39**

(73) Proprietor: **MOTOROLA, INC.**
**Schaumburg, IL 60196 (US)**

(72) Inventors:
• **Ginsberg, Avi**
**Even-Yehuda 40500 (IL)**
• **Grobman, Alexander**
**Netanya 42491 (IL)**
• **Miretsky, Alex**
**Haifa 32714 (IL)**

(74) Representative: **Gibson, Sarah Jane et al**
**Motorola**
**European Intellectual Property Section**
**Law Department**
**Midpoint**
**Alencon Link**
**Basingstoke, Hampshire RG21 7PL (GB)**

(56) References cited:
**EP-A- 0 745 932**       **WO-A-95/27244**
**US-A- 5 632 024**

**Description**

<u>Field of the Invention</u>

The present invention generally relates to computer systems, and particularly to a converter which is part of the system, and to a method.

<u>Background of the Invention</u>

Computers can be classified into complex instruction set computers (CISC) and reduced instruction set computers (RISC). The CISC machines conveniently read instruction words with variable length (e.g., 8 bit to 64 bit) in a single software program, wherein the RISC machines often read instructions words with constant length (e.g., 32 bit). The number of possible bit combinations which form the instruction words is often high for CISC and low for RISC. Among others, these features make RISC especially suitable for the integration of processor and memory into a single chip in embedded systems. However, a software program written for RISC may require more memory space than a software program with the same function which runs on a CISC machine.

From International patent publication no. WO 95 27244 A there is known a computer system with a RISC processor using 32-bit instructions, certain instructions being stored in 16-bit compressed form and expanded for use by the processor, reducing their fetch time. An instruction is extracted from memory via a set of buffers which are loaded sequentially with 8-bit or 16-bit words. A compressed instruction detector unit expands a compressed instruction and controls a multiplexer to pass either expanded instructions therefrom or full-length instructions direct from the buffers to the processor.

The present invention seeks to provide a computer system which mitigates or avoid these and other disadvantages and limitations of the prior art.

<u>Brief Description of the Drawings</u>

FIG. 1    illustrates a simplified block diagram of a computer system according to the present invention;
FIG. 2    illustrates simplified block diagrams of an instruction word and a code word;
FIG. 3    illustrates a simplified block diagram of a memory used in the system of FIG. 1;
FIG. 4    illustrates a simplified block diagram of a converter used in the system of FIG. 1; and
FIGS. 5-6    are simplified diagrams illustrating a method of the present invention to operate the converter of FIG. 4; wherein FIG. 5 is a flowchart diagram and FIG. 6 is a diagram of a bit stream.

<u>Detailed Description of a Preferred Embodiment</u>

For convenience, a glossary of terms used here and their definitions is provided prior to the claims.

Some portions of this description are presented in terms of symbolic representations. Such representations are used by persons skilled in data processing to more effectively convey the substance of their work to other persons. Among others, the representations stand for physical manipulations of physical quantities. Usually, these quantities take the form of electrical, optical, magnetic or other signals capable of being stored, transferred, combined, compared, and otherwise manipulated. It has proven convenient at times, principally for reasons of common usage, to refer to these signals as bits, values, elements, symbols, characters, terms, numbers, or the like. All of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary or desirable in most cases in any of the operations described herein which form part of the present invention; the operation are machine operations. In all cases the distinction between the method operations in operating a computer and the method of computation itself should be considered.

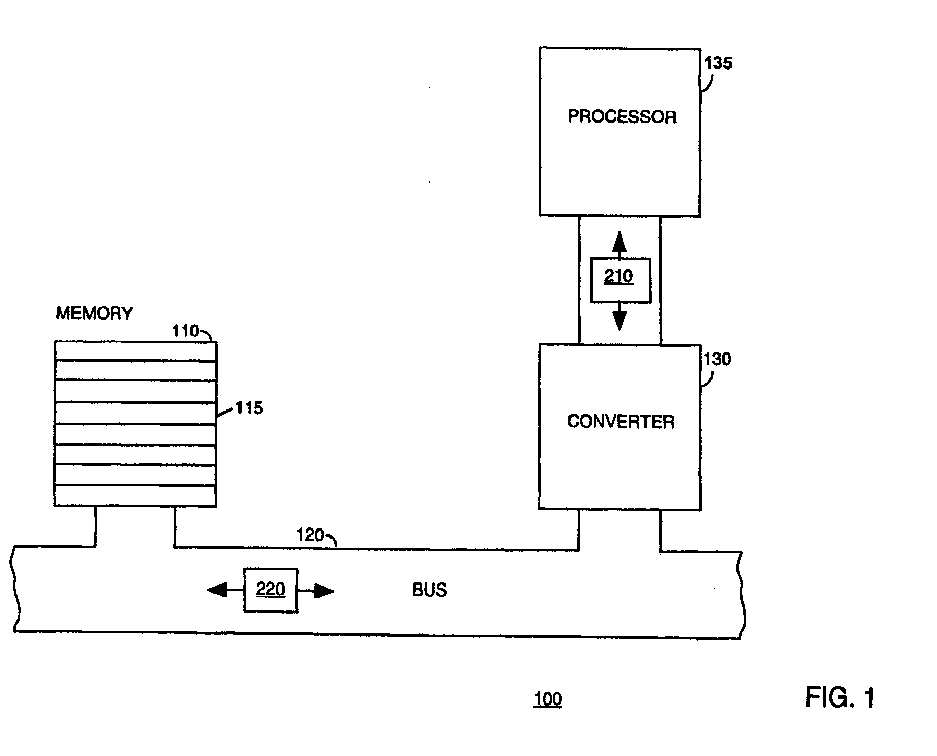

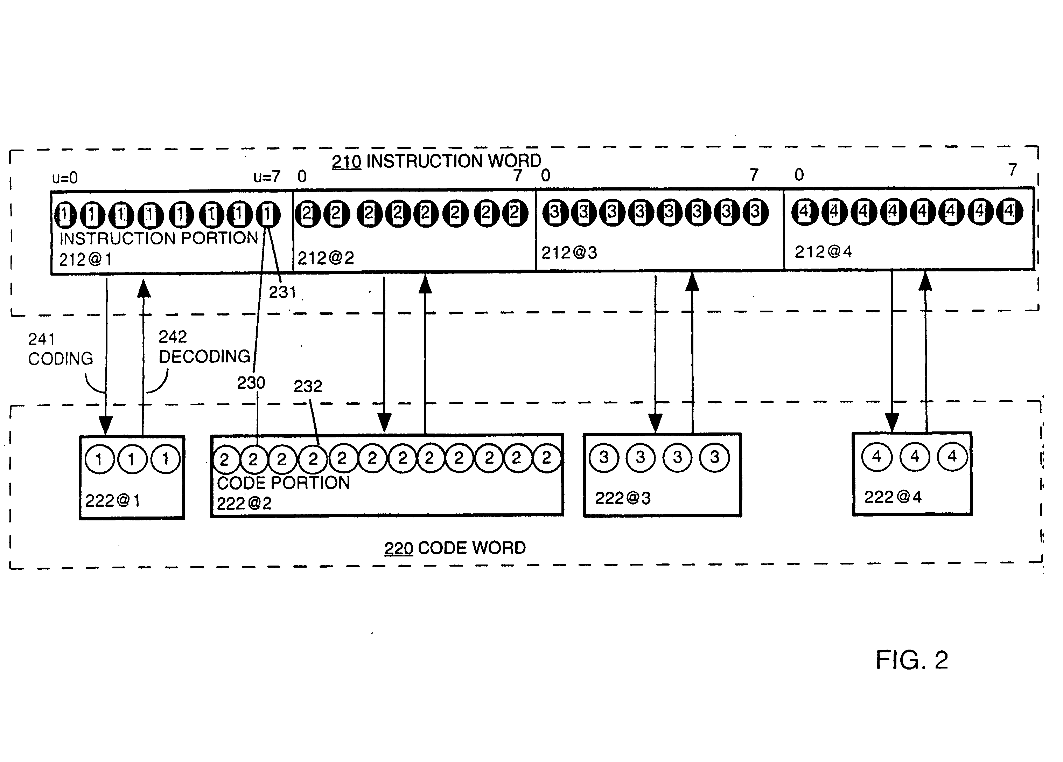

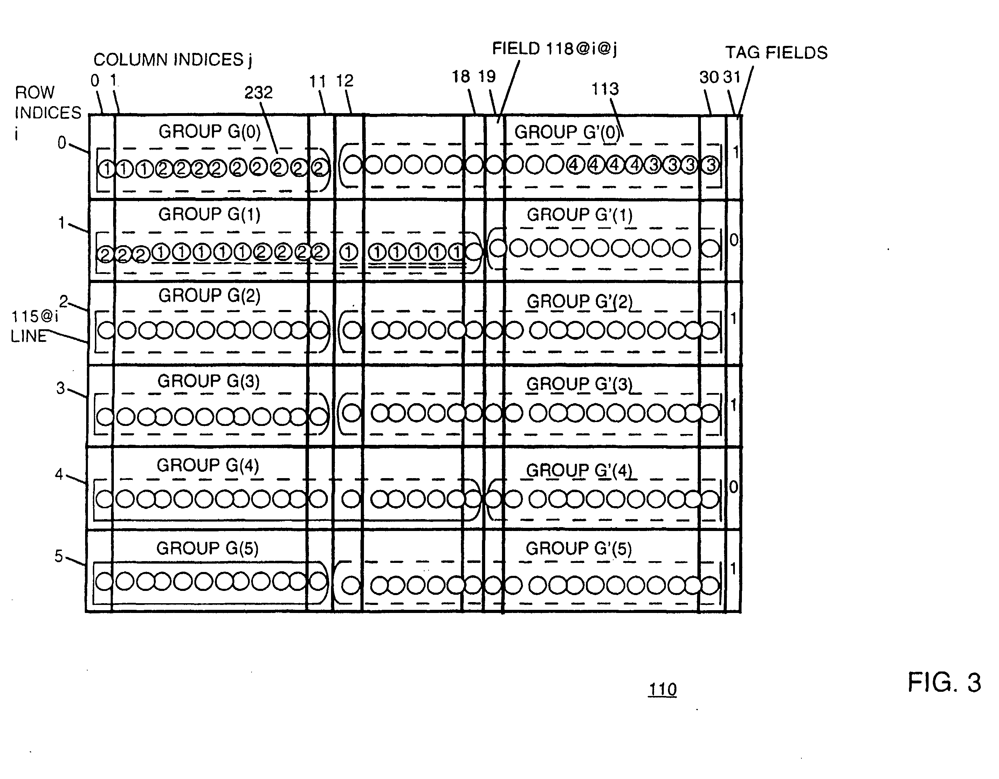

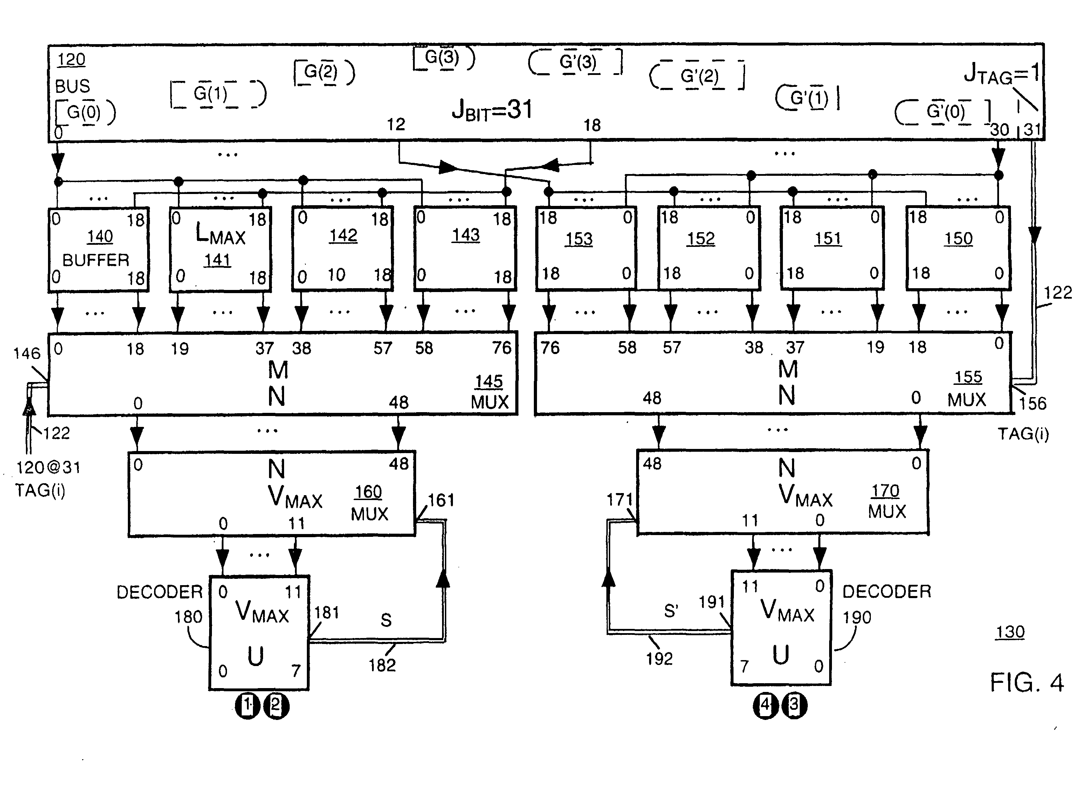

FIG. 1 illustrates a simplified block diagram of computer system 100 of the present invention. System 100 comprises memory 110, bus 120, converter 130, and processor 140. Memory 110 sends code words 220 (details in FIG. 2) in, preferably, compressed form, to converter 130 via bus 120. Converter 130 decodes code words 220 and sends instruction words 210 in, preferably, expanded form, to processor 140. A reverse operation is also possible: Processor 140 sends instruction words 210 to converter 130; converter 130 codes instruction words 210 into code words 220; and bus 120 forwards code words 220 to memory 110. Processor 140 executes the instructions represented by instruction words 210. For the convenience of explanation, it is assumed that converter 130 provides or receives a single instruction word 210 at one time. Bus 120 can carry portions of code words 220 in parallel or serially. Also, bus 120 can simultaneously carry portions which belong to different code words 220. Memory 110 has a plurality of memory lines 115. For simplicity of explanation, it is assumed that data bus 120 carries the contents of a single memory line 115 at one time. More details for memory 110 are explained in connection with a non-limiting example illustrated in FIG. 3. Details of converter 130 are explained in connection with FIG. 4. Computer system 100 can comprise other elements, e.g., address busses, well known in the art. For simplicity, such elements are not illustrated.

The present invention has a series of advantages, among them: (**a**) Converter **130** can provide instruction words 210 in real time without significant delay and without significant intermediate memory between converter 130 and memory 140. For example, a cache is not required. (**b**) The software program stored in memory 110 by code portions 220 needs less memory space than with the program stored by uncompressed instruction words 210. (**c**) Conveniently, but not necessarily, system 100 is an embedded system in which memory 110, bus 120, converter 130, and processor 140 are integrated into a single semiconductor substrate. (**d**) Preferably, processor 140 is a RISC machine.

FIG. 2 illustrates simplified block diagrams of instruction word 210 (dashed) and code word 220 (dashed). In FIG. 2 and in other figures, data units 230, which are not further divided, have symbols ❶ ❷ ❸ ❹ ① ② ③ ④ or simply ○. The numbers in the circle symbols (e.g., 1, 2, 3, 4) are collectively referred to by portion index "p". Preferably, data units 230, for convenience hereinafter "bits", represent binary quantities with logical "0" and "1" values, as the case may be. But this is only a convention used for the simplicity of explanation. Those of skill in the art, are able, based on the description herein to use other values. The actual values (e.g., "0" or "1") of bits 230 are not important for the description. The term "instruction" used alone or in combination with other terms is intended to be a convenient label for any information which is supplied to a processor, such as commands, numerical data or text data, and other kind of data.

Conveniently, instruction word 210 has a predefined number of P*U instruction bits 231 (e.g., 32 bits) which have symbols ❶ ❷ ❸ ❹. Instruction word 210 is divided into P instruction portions 212@p (conveniently p=1 to P). Preferably, all instruction portions 212@p each comprise an equal number of U(p) = U instruction bits 231. For example and not intended to be limiting, instruction word 210 has P = 4 instruction portions 212@p: e.g., instruction portion 212@1 with U(1) = 8 instruction bits ❶ , portion 212@2 with U(2) = 8 instruction bits ❷ , portion 212@3 with U(3) = 8 instruction bits ❸ and portion 212@4 with U(4) = 8 instruction bits ❹ . For convenience, instruction bit indices u (e. g., u = 0 to U-1 = 7) within each instruction portion 212@p are given at the top of the blocks which symbolize instruction portions 212@p. Instruction word 210 is illustrated by a single block of instruction portions 212@1 to 212@P indicating that they are, preferably, used in combination.

Instruction word 210 can be transformed to code word 220 with P code portions 222@p (p=1 to P), and vice versa. Code portions 222@p comprise code bits 232 (symbols ① ② ③ ④ ). As shown by unidirectional arrows, coding 241 transforms a single instruction portion 212@p to a single code portion 222@p, and decoding 242 transforms a single code portion 222@p to a single instruction portion 212@p. Code portions 222@p can be conveniently stored, transferred, or otherwise manipulated separately.

Preferably, coding 241 is performed with compression so that code portion 222@p has less bits 232 than its corresponding instruction portion 212@p. For example, coding 241 has reduced the number of bits from U(1) = 8 bits ❶ in instruction portion 212@1 to V(1) = 3 bits ① in code portion 222@1. This bit reduction is convenient, but not essential: For example, instruction portion 212@2 (with U(2) = 8 bits ❷ ) can be coded to code portion 222@p with V (2) = 12 bits ② . Decoding 242 is, preferably, performed by expanding, i.e. increasing the number of bits. For example, P = 4 code portions 222@p have the following numbers of bits: code portion 222@ 1 with V(1) = 3 code bits ① , code portion 222@2 with V(2) = 12 code bits ② , code portion 222@3 with V(3) = 4 code bits ③ , and code portion 222@4 with V(4) = 3 code bits ④ .

The number of code bits in each code portion 222@p is limited by a minimum number $V_{MIN}$ ("bounded code") and the maximum number $V_{MAX}$, that is:

$$V_{MIN} \leq V(p) \leq V_{MAX}, \tag{1}$$

with the symbol ≤ for smaller than or equal to. In the example used for explanation herein, V(p) has the following values:

$$3 \leq V(p) \leq 12, \tag{2}$$

for all p (p = 1 to P). Some instruction portions 212@p can be coded such that some code portions 222@p (e.g.,

portions with V(p) > U(p) ) can include or duplicate instruction portions 212@p.

Methods and devices for coding and decoding are well known in the art. The following reference [1] gives an introduction to coding and decoding: Bernard Sklar: "DIGITAL COMMUNICATIONS Fundamentals and Applications", published by Prentice Hall, Englewood Cliffs 1998, ISBN 0-13-211939-0, especially chapter 11.6 "Source Coding" on pages 595-667. Therefore, persons of skill in the art are able, based on the description herein, to practice the present invention using known coders and decoders without the need for further explanation. Conveniently, code words 220 used in the present invention are Huffman coded (see sub-chapter 11.6.2 of [1] with a coding tree). The Huffman code is a prefix-free code (e.g., no additional bits between ① and ② required) and a variable length code (e.g., V(p) are different). Huffman coding (e.g., coding 241) is assumed only for the purpose of explaining the present invention and not intended to be limiting.

Apparatus and method of the present invention can be applied to code words 220 based on other coding 241 and decoding 242 procedures which are already known in the art or which will be developed in the future. The present invention can also be applied for encrypting or decrypting data. Preferably, the number of possible variations (e.g., $2^{(U*P)}$) of instruction bits 231 is adapted for RISC processors (e.g., processor 140).

FIG. 3 illustrates a simplified block diagram of memory 110 used in computer system 100. For convenience, memory 110 is considered as a matrix of memory fields 118@i@j with row indices i (i = 0 to I-1, e.g., I = 6) and column indices j (j = 0 to J-1, e.g., J = 32). Memory fields 118@i@0 to 118@i@(J-1) belong to memory line 115@i (cf. FIG. 1). Preferably, each memory field 118@i@j stores a single bit of information. The majority of $J_{BIT} < J$ (e.g., $J_{BIT} = 31$) memory fields 118@i@j are "bit fields" and store code bits 232, (cf. FIG. 2, symbols ① ② ③ ④ or ○). As mentioned above, the logical values (e.g., "1" or "0") of the code bits are not considered here.

For each memory line 115@i, code bits 232 can optionally be classified in two or more groups G(i) ) and G'(i). For convenience of explanation, groups are illustrated by frames 113 surrounding code bits 232. For convenience, at the beginning of each group, frame 113 has sharp comers; and at the end of each group, frame 113 has round corners. Each group G(i) or G'(i) can comprise $1 \le L(i) \le L_{MAX}$ code bits. For example, group G(0) comprises L(0) = 12 code bits ① ① ① ② ② ② ② ② ② ② ② ② (in fields 118@0@0 to 118@0@11). The first V(1) = 3 bits ① of group G(0) (beginning with column index 0, see the sharp frame comer on the left side) belong to code portion 222@1 (cf. FIG. 2) and the other 9 bits ② of group G(0) belong to the V(2) = 12 bits of code portion 222@2. Group G'(0) comprises L'(0) = 19 code bits ③ ③ ③③ ④ ④ ④ ④ ... ○ (in fields 118@0@12 to 118@0@30). The remaining 3 bits ② of code portion 222@2 stored in memory line 115@1 and form part of group G(1). The remaining bits in groups G(1) to G(5) belong, preferably to further code portions 222@_1_ and 222@_2_ of further code words. For convenience, the underscoring of symbols (e.g., ①_ and ②_ ) and reference numbers or indices (e.g., _1_, _2_, _p_) indicate further portions. Accordingly, still further portions are indicated by double-underscoring (e.g. ①__ and ②__). For example, the first 4 bits ③ of group G'(0) (beginning with column 30, sharp corner) belong to code portion 222@3; the next 3 bits ④ belong to code portion 222@4; the next 3 bits ③_ to further code portion 222@_3_ and so on.

The numbers L(i) and L'(i) indicate group lengths by bit numbers. In memory line 110@1, group G(1) has L(1) = 19 code bits b(1,0) to b(1,18) and group G'(1) has L'(1) = 12 code bits b(1,19) to b(1,30), and so on.

Optionally, a number of $J_{TAG}$ memory fields 118@j@i of each memory line 118@i have the function of tag fields. Preferably, $J_{TAG} + J_{BIT} = J$. In the example of FIG. 3, each memory line 118@i has a single tag field 118@30 ($J_{TAG} = 1$) in column J-1, illustrated at the right side of memory 110. The column position of the tag fields is not important for the present invention. For every memory line 115@i, tag field 118@i@30 stores line tag TAG(i). TAG(i) is an indication for the lengths of groups G(i) and G'(i) in bits. In the example of FIG. 3, TAG(i) can have binary values "1" or "0" which define the group lengths L(i) as follows:

$$L(i) = 12 \text{ and } L'(i) = 19 \text{ for TAG(i)} = \text{"1"} \tag{3}$$

(e.g., lines i = 0, 2, 3 and 5)

$$L(i) = 19 \text{ and } L'(i) = 12 \text{ for TAG(i)} = \text{"0"} \tag{4}$$

(e.g., lines i = 1 and 4)

Preferably, if group G(i) has a first length (e.g., 19 bits), then group G'(i) has a second length (e.g., 12 bits), and vice versa. Also, group lengths L(i) and L'(i) in combination correspond, preferably, to $J_{BIT}$, that is:

$$L(i) + L'(i) = J_{BIT} \tag{5}$$

FIG. 4 illustrates a simplified block diagram of converter 130 used in computer system 100. Preferably, the converter elements are 2*B buffers 140, 141, 142, 143, 150, 151, 152 and 153, multiplexers 145, 155, 160, 170, and decoders 180, and 190. For convenience, FIG. 4 also illustrates bus 120 (cf. FIG. 1) as one of the elements. Single lines symbolize the transfer of bits. Double lines 122, 182 and 192 symbolize the transfer of control signal which can, optionally, comprise multiple bits. The arrows on the lines indicate a preferred signal flow and also distinguish inputs and outputs of the elements. For the purpose of explanation, inputs and outputs are identified by representative reference indices within the elements (e.g., 0 to 18 in buffers 140-153). These indices are intended to be non-limiting examples and are counted from 0 to the number of inputs/outputs minus 1. The indices are referred to also by lowercase letters, such as, e.g., "i" and the numbers are given by uppercase letters, e.g., N. Persons of skill in the art are able, based on the description herein, to implement converter 130 with elements which have higher, equal or lower input/output numbers and buffer numbers B than illustrated in FIG. 4. Also, the relation between the numbers is, unless specified in the following text, not essential for the present invention.

Preferably, bus 120 has J outputs identified in the text as 120@j (e.g., J = 32, 120@0 to 120@31). The writing convention "reference@index" is conveniently applied hereinafter to other elements. Among the J outputs 120@j, bus 120 simultaneously provides $J_{BIT}$ code bits (e.g., ① ② ③ ④ , not shown) at outputs 120@0 to 120@($J_{BIT}$-1) (e.g., 120@0 to 120@31).

Buffers 140-143 and 150-153 each have $L_{MAX}$ inputs and outputs (e.g., $L_{MAX}$ = 19). Outputs 120@0 to 120@($L_{MAX}$ -1) of bus 120 are coupled to inputs 140@0 to 140@($L_{MAX}$-1) of buffer 140, to inputs 141@0 to 141@($L_{MAX}$-1) of buffer 141, to inputs 142@0 to 142@($L_{MAX}$ -1) of buffer 142, and to inputs 143@0 to 143@($L_{MAX}$ -1) of buffer 143, respectively. Outputs 120@($J_{BIT}$-1) (e.g., 120@30) to 120@($J_{BIT}$-$L_{MAX}$) (e.g., 120@12) are coupled to inputs 150@0 to 150@$J_{MAX}$ of buffer 150, to inputs 151@0 to 151@$J_{MAX}$ of buffer 151, to inputs 152@0 to 152@$J_{MAX}$ of buffer 152, and to inputs 153@0 to 153@$J_{MAX}$ of buffer 153, respectively.

Multiplexer 145 has M inputs 145@0 to 145@(M-1). Preferably, number M is related to $L_{MAX}$ as:

$$M \geq B * L_{MAX} \tag{6}$$

$$B = 4 \text{ (for example)} \tag{7}$$

$$M = 76 \text{ (for example)} \tag{8}$$

wherein B indicates the number of buffers (e.g., B = 4, buffers 140-143) which are coupled to multiplexer 145. Preferably, multiplexer 145 can service all B = 4 buffers 140-143 simultaneously. Outputs 140@0 to 140@($L_{MAX}$-1) of buffer 140 are coupled to inputs 145@0 to 145@($L_{MAX}$-1), respectively; outputs 141@0 to 141@($L_{MAX}$-1) of buffer 141 are coupled to inputs 145@($L_{MAX}$) to 145@(2*$L_{MAX}$-1), respectively; outputs 142@0 to 142@($L_{MAX}$-1) of buffer 142 are coupled to inputs 145@(2*$L_{MAX}$) to 145@(3*$L_{MAX}$-1), respectively; and outputs 143@0 to 143@($L_{MAX}$-1) of buffer 143 are coupled to inputs 145@(3*$L_{MAX}$) to 145@(4*$L_{MAX}$-1), respectively. Similarly, B' is the number of buffers which are coupled to multiplexer 155 (e.g., B' = B = 4, buffers 150-153). Multiplexer 155 has M' inputs 155@0 to 155@(M'-1), that is:

$$M' \geq 4 * L_{MAX}. \tag{9}$$

$$M' = M \tag{10}$$

$$M' = 76 \text{ (for example)} \tag{11}$$

Outputs 150@0 to 150@($L_{MAX}$-1) of buffer 150 are coupled to inputs 155@0 to 155@($L_{MAX}$-1) of multiplexer 155, respectively; outputs 151@0 to 151@($L_{MAX}$-1) of buffer 151 are coupled to inputs 155@($L_{MAX}$) to 155@(2*$L_{MAX}$-1), respectively; outputs 152@0 to 152@($L_{MAX}$-1) of buffer 152 are coupled to inputs 155@(2*$L_{MAX}$) to 155@(3*$L_{MAX}$-1), respectively; and outputs 153@0 to 153@($L_{MAX}$-1) of buffer 153 are coupled to inputs 155@(3*$L_{MAX}$) to 155@(4*$L_{MAX}$-1), respectively. Also, multiplexers 145 and 155 have inputs 146 and 156 coupled to output 120@J-1 (e.g., 120@31) via line 122 to receive line tag TAG(i).

Multiplexer 145 has N outputs 145@0 to 145@(N-1) coupled to N inputs 160@0 to 160@(N-1) of multiplexer 160, respectively. Similarly, multiplexer 155 has N' outputs 155@0 to 155@(N'-1) coupled to N' inputs 170@0 to 170@(N'-1) of multiplexer 170, respectively. Conveniently, inputs 160@n and 170@n' are also identified by indices n (e.g., $0 \leq n \leq$ (N-1)) and n' (e.g., $0 \leq n' \leq$ (N'-1)), respectively. The numbers N and N' are conveniently chosen as:

$$N \geq 2*L_{MAX} + V_{MAX} - 1 \tag{12}$$

$$N' = N \tag{13}$$

$$V_{MAX} - 1 = 11 \text{ (for example)} \tag{14}$$

$$N = 48 \text{ (for example)} \tag{15}$$

Multiplexer 160 has $V_{MAX}$ outputs 160@0 to 160@($V_{MAX}$-1) which are coupled to $V_{MAX}$ inputs 180@0 to 180@($V_{MAX}$-1), respectively, of decoder 180. Similarly, multiplexer 170 has $V_{MAX}$ outputs 170@0 to 170@($V_{MAX}$-1) which are coupled to $V_{MAX}$ inputs 190@0 to 190@($V_{MAX}$-1), respectively, of decoder 190. In other words, multiplexers 160 and 170 move an $V_{MAX}$ wide observation window of decoders 180 and 190, respectively. The term "$V_{MAX}$ - 1" in equation (14) conveniently results from the worst case in which a single code portion 222@p is stored in two adjacent buffers (e.g., 140-143) with one bit in one buffer and the other $V_{MAX}$ - 1 bits in the adjacent buffer. Decoder 180 has control output 181 coupled to control input 161 of decoder 160 via line 182; and decoder 190 has control output 191 coupled to control input of decoder 170 via line 192. Decoder 180 has U outputs 180@0 to 180@(U-1) for consecutively providing instruction portions 212@1 (cf. FIG. 2) with instruction bits ❶ and instruction portions 212@2 with instruction bits ❷. Decoder 190 has U outputs 180@0 to 190@(U-1) for consecutively providing instruction portions 212@3 with instruction bits ❸ and instruction portions 212@4 with instruction bits ❹.

Buffers 140-143 and 150-153 are intended to be storage means, while multiplexers 145, 155, 160 and 170 and decoders 180 and 190 are not intended to be storage means. Decoders 180 and 190 can be implemented, for example, and not intended to be limiting, by look-up tables or by logic circuits which perform decoding according the code tree, or by other means which are well known in the art.

Decoders 180 and 190 can send instruction portions 212@p to processor 140 without significant delay. Preferably, decoders 180 and 190 operate under real-time conditions and can provide instruction portions 212@p when required by processor 140.

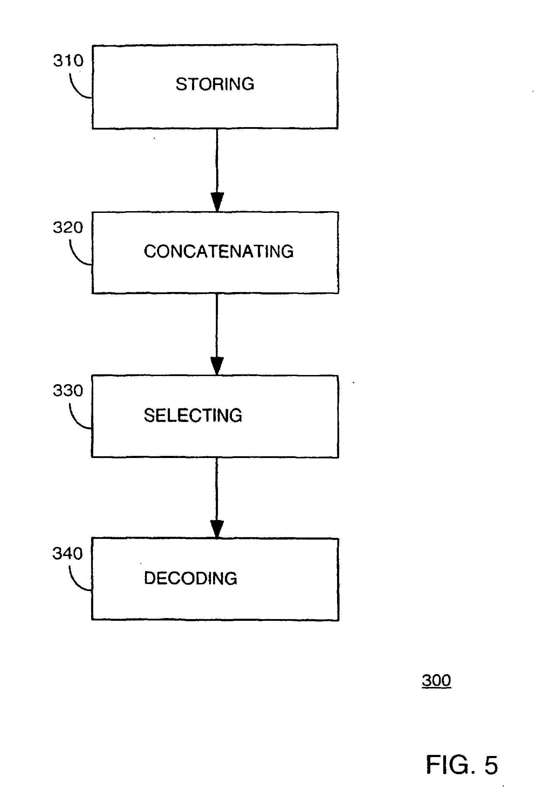

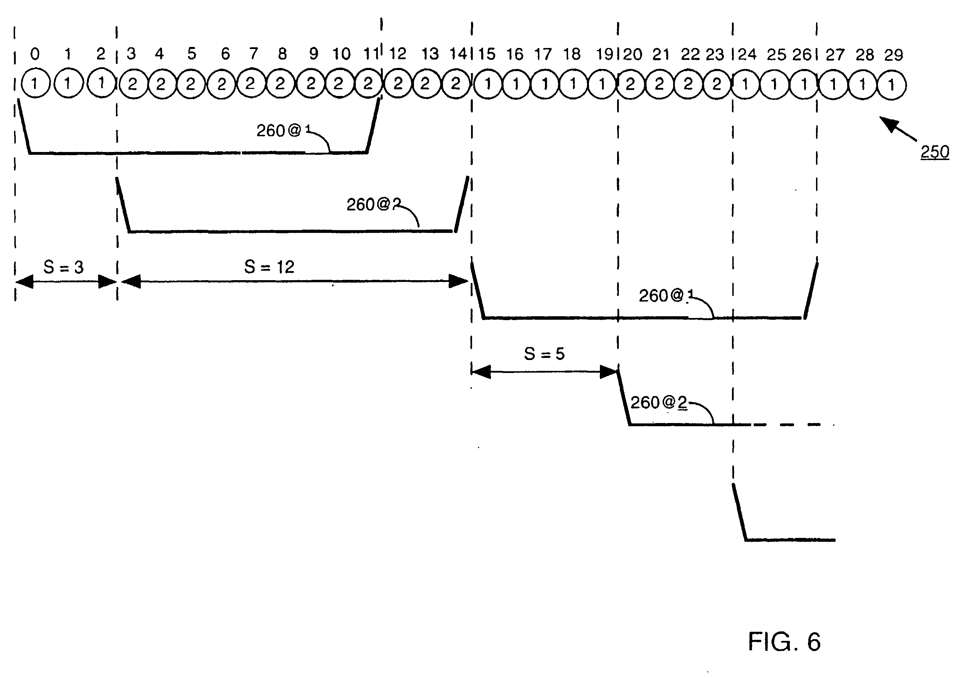

FIGS. 5-6 are simplified diagrams illustrating method 300 of the present invention to operate converter 130. As illustrated in the flow chart diagram of FIG. 5, method 300 comprises storing step 310, concatenating step 320, selecting step 330, and decoding step 340. The diagram of FIG. 6 gives more details for concatenating step 320, selecting step 330 and decoding step 340 by way of example. Steps 310-340 are, preferably, executed consecutively. Optionally, some steps can be executed simultaneously with different data sets. Pipelining is well known in the art, so that persons of skill in the art able, based on the description herein, to implement pipelining. For convenience, method 300 is explained in connection with buffers 140-143, multiplexers 145 and 160, and decoder 160 illustrated on the left side of FIG. 4. It is explained in detail how converter 130 converts unprimed groups G(i) (see FIG. 3) of code bits ① and ② and provides instruction portions 212@1 and 212@2 with instruction bits ❶ and ❷. Persons of skill in the art will understand without the need of further explanation how the converter elements of the right side of FIG. 4 (buffers 150-153, multiplexers 155 and 170, and decoder 190) operate accordingly and how they convert primed groups G'(i) with code bits ③ and ④ to instruction portions 212@3 and 212@4 with instruction bits ❸ and ❹. Method 300 can be executed by elements on one side alone and can thereby be applied to all code bits ① ② ③ ④ and all instruction bits ❶ ❷ ❸ ❹. Details for steps of method 300 are given in the following. For convenience of explanation, in steps 310-330, the code bits are given with the p-indices. However, buffers 140-143, 150-153 and multiplexers 145, 155, 160 and 170 which participate in steps 310-330, do not need to distinguish to which portion 222@p a particular code bit ○ belongs to.

*Storing step 310*: Bus 120 consecutively sends groups G(i) of code bits to buffers 140-143 which store groups G(i). For example, the 12 code bits ① ① ① ② ② ② ② ② ② ② ② ② of group G(0) (cf. FIG. 3, e.g., TAG(0) = "1") go into buffer 140 (e.g., outputs 120@0 to 120@11, inputs 140@0 to 140@11). The numbers p = 1 and p = 2 within the circles are not important here and given only for convenience. Conveniently, buffers 140-143 and multiplexers 145 and 160 do not distinguish to which code portions 222@p the code bits belong to. In the next repetition, the code 19 bits ② ② ② ① ① ① ① ① ② ② ② ② ① ① ① ① ① ① ① of group G(1) go into buffer 141 (e.g., TAG(1) = "0", outputs 120@0 to 120@18, inputs 141@0 to 141 @18); then the 12 code bits ○ of group G(2) go into buffer 142; and finally the 12 code bits ○ of group G(3) go into buffer 143. Buffers 140-143 conveniently store the bits until they are no longer needed (details later). In a next cycle, bus 120 sends the bits of group G(4) to buffer 140 and so on. Storing step 310 can require enabling / disabling of buffer inputs or switching of bus output 120@j to buffer inputs well understood by a person of skill in the art.

Conveniently, bus 120 can also send bits ○ from neighboring group G'(i) to buffers 140-143 wherein the bits from G'(i) are disregarded in the next step. For example, bus 120 sends the 12 bits of group G(0) to buffer 140 and sends bits ○ of group G'(0) (from memory.fields 118@0@12 to 118@0@18) to buffer 140. This is convenient, but not essential for the present invention.

*Concatenating step 320:* Multiplexer 145 receives tag bit TAG(i) at input 146 and the code bits from groups G(i) at inputs 145@m. Multiplexer 145 concatenates the bits to bit stream 250 (example in FIG. 6) at outputs 145@n according to the tag bits TAG(i).

For example, but not intended to be limiting, bit stream 250 (FIG. 6) can start with the following bits:

$$① ① ① ② ② ② ② ② ② ② ② ② ① ① ① ① ② ② ② ① ① ① ① ①... \hspace{2cm} (16)$$

For convenience, numbers at the top of the bit symbols indicate index n. In the example, bit stream comprises V(1) = 3 code bits ① of code portion 222@ 1 at inputs 160@0 to 160@2 of multiplexer 160, V(2) = 8 code bits ② of code portion 222@2 at inputs 160@3 to 160@14, V(1) = 5 code bits ① of further code portion 222@1 at inputs 160@15 to 160@19, V(2) = 4 code bits ② of further code portion 222@2 at inputs 160@20 to 23, and an unspecified number of code bits ① of still further code portion 222@1. Bitstream 250 is available also at inputs 160@n of multiplexer 160.

*Selecting step 330:* Multiplexer 160 receives bit stream 250 from multiplexer 145 and receives shift pointer S at input 161 from decoder 180. Multiplexer 160 consecutively sends clusters 260@p (frames in FIG. 6) etc. of $V_{MAX}$ code bits to inputs 180@0 to 180@($V_{MAX}$-1) of decoder 180. Initially, shift pointer S is S = 0 so that multiplexer 160 provides cluster 260@ 1 with the first $V_{MAX}$ code bits. In the example, cluster 260@ 1 comprises $V_{MAX}$ code bits ① ① ① ② ② ② ② ② ② ② ② ② (from inputs 160@0 to 160@11). With the next repetition of step 330, shift pointer is changed to S = 3 which corresponds to the number S = V(1) of code bits in code portion 222@ 1 (details in the next step). Multiplexer 160 provides cluster 260@2 with bits ② ② ② ② ② ② ② ② ② ② ② ② (from inputs 160@3 160@14). Multiplexer 160 can twice or even more times send the same code bits to decoder 180. For example, the 9 code bits ② ② ② ② ② ② ② ② ② which have initially belonged to cluster 260@1 now belong to cluster 260@2. Shift pointer S is now S = 12 and multiplexer 160 provides cluster 260@1 with bits ① ① ① ① ① ② ② ② ② ① ① ① (from inputs 160@15 to 160@26). Then (next repetition), shift pointer S becomes S = 5 and multiplexer 160 provides cluster 260@2 with the bits from input 160@20 to 160@32. Preferably, multiplexer 160 can form further clusters by connecting inputs in an wraparound mode (e.g., input 160@(N-1) to output 160@0, input 160@0 to output 160@1).

*Decoding step 340:* Decoder 180 consecutively receives clusters 260@p. After receiving a single cluster 260@p, decoder provides U instruction bits belonging to instruction portion 212@p. Also, decoder 180 determines the number V(p) of code bits in code portion 222@p and provides shift pointer S (at output 181) according to:

$$S = V(p) \hspace{2cm} (17)$$

For example, decoder 180 receives the $V_{MAX}$ = 12 code bit of cluster 260@ 1 and provides the U = 8 instruction bits ❶ ❶ ❶ ❶ ❶ ❶ ❶ ❶ of instruction portion 212@1 by decoding bits ① ① ① and determines that code portion 222@ 1 has V(1) = S = 3 code bits ① ① ①. In the next repetition of decoding step 340, decoder 180 receives cluster 260@2, provides U = 8 instruction bits ❷ ❷ ❷ ❷ ❷ ❷ ❷ ❷ of code portion 222@2 and S = 12. As mentioned above, code portion 222@2 has the maximum possible number $V_{MAX}$ = 12 of bits. Next, decoder 180 receives cluster 260@1 and decodes bits ① ① ① ① ① to further instruction portion 212@1 with bits ❶ ❶ ❶ ❶ ❶ ❶ ❶ ❶.

It is well known in the art, how decoder 180 can obtain S = V(p) from a cluster 260@p which has code bits belonging to different code portions 210@p and 210@p'. However, having shift pointer S obtained and used in a feed back scheme from decoding step 340 to selecting step 330, is convenient, but not essential for the present invention. Those of skill in the art, are able, based on the description herein, to derive shift pointer otherwise, for example, from a multibit tag line TAG(i).

In other words, method 300 of the present invention can also be described as a data converting method for converting code portions 222@p with code bits 232 to instruction portions 210@p with instruction bits 231, comprising in repetitions the steps of: (a) storing groups of code bits in buffers (e.g., G(i) to buffers 140-143); (b) concatenating the groups of code bits to a bitstream (e.g., bitstream 250); (c) selecting clusters of code bits (e.g., clusters 260) from the bitstream, wherein each cluster comprises at least one code portion (e.g., cluster 260@1 with portion 222@1); and (d) decoding code portions to instruction portions (e.g., portion 222@ 1 to 210@1) and providing a shift pointer (e.g., S = 3) which is recursively used in the selecting step to identify new clusters (e.g., cluster 260@2).

Conveniently, (i) each group G(i) comprises a predefined number of code bits (e.g., 12 bits or 19 bits); (ii) in the storing step, code bits which do not belong to a given group are also stored in the buffers (e.g., 7 bits of G'(0) also into buffer 140) and (iii) in the concatenating step only the code bits which belong to a predetermined group are concatenated (i.e., multiplexer 145 disregards the bits of G'(i)). Code portions 222@p and instruction portions 210@p are conveniently related by Huffman coding.

Further, method 300 of the present invention can also be described as a method for converting code portion 222@p having $V_{MIN} \leq V(p) \leq V_{MAX}$ code bits to a corresponding instruction portion 212@p having U(p) instruction bits, with the following steps of: (i) distributing groups G(i) of $L(i) \leq L_{MAX}$ code bits to a plurality of B buffers identified by index b (e.g., b = 1 for buffer 140, b = 2 for buffer 141, b = 3 for buffer 142 and b = B = 4 for buffer 143), wherein each group G(i) comprises a code portion 222@p or a further code portion 222@(p+1), and buffer b = ($mod_B$ i) (modulo operation to the base B) stores at least a single group G(i) (cf. storing step 310); (ii) combining the L(i) code bits of group G(i) to the L(i+1) code bits of group G(i+1) and so on to bitstream 250 (cf. concatenating step 320); and (iii) sending clusters (e.g., 260@1) of $V_{MAX}$ code bits which comprise the code bits of code portion 222@p from bitstream 250 to decoder 180 which provides instruction portion 210@p (cf. selecting step 330 and decoding step 340).

Optionally, some code portions have code bits located in groups G(i) and G(i+1), as for example in reference to FIG. 3, some bits ② of portion 222@2 in G(0) and some bits ② in G(1). Optionally, distributing, combining, and sending steps are performed cyclically and in a pipeline. For example, while decoder 180 is decoding cluster 260@1, buffer 140 can already receive a new group G(i). In the sending step, the clusters are cyclically modified by disregarding S old code bits and adding S new code bits, with S = V(p-1) being the number of code bits of a previous code portion p-1. For example, in reference to FIG. 6, bits ① ① ① of cluster 260@1 (p = 1) are disregarded and bits ② ② ② of portion 222@2 (p = 2) are added.

While the invention has been described in terms of particular structures, devices and methods, those of skill in the art will understand based on the description herein that it is not limited merely to such examples and that the full scope of the invention is properly determined by the claims that follow.


Glossary of Terms


| | |
|---|---|
| ① ② ③ ④ ○ | symbols for code bits, optionally with index p in the circle |
| ❶ ❷ ❸ ❹ | symbols for instruction bits, index p in the circle |
| "1" or "0" | binary values |
| e.g., ① | (single underscoring) for belonging to further code portions |
| e.g., ① | (double underscoring) for still further code portions |
| @ | used to combine reference numbers with indices |
| b | buffer index |
| B | number of buffers |
| G(i), G'(i) | group identifier |
| i | row index |
| I | number of memory rows |
| j | column index |
| J | number of memory columns, $J = J_{BIT} + J_{TAG}$ |
| $J_{BIT}$ | number of bit fields |
| $J_{TAG}$ | number of tag fields |
| L(i) and L'(i) | group length |
| $L_{MAX}$ | buffer length (number of inputs and outputs) |
| m, m' | input indices of multiplexer |
| n, n' | output indices of multiplexer |
| M, M' | number of inputs of multiplexer |
| N, N' | number of inputs/outputs of multiplexer |
| p | portion index |
| P | number of portions |

| | |
|---|---|
| S, S' | shift pointer |
| TAG(i) | line tag |
| u | index for instruction bits |
| U(p), U | number of instruction bits in instruction portion |
| V(p) | variable number of code bits in code portion |
| $V_{MIN}$, $V_{MAX}$ | minimum and maximum numbers of code bits in code portions, number decoder inputs |

## Claims

1. A system (100) which converts code portions identified by index p each having a variable number $V(p) \leq V_{MAX}$ of code bits to corresponding instruction portions identified by index p each having U(p) instruction bits, said system comprising:

   a first plurality of B buffers (140-143) each having $L_{MAX}$ inputs and $L_{MAX}$ outputs, said buffers consecutively receiving variable length groups G(i) with $L(i) \leq L_{MAX}$ code bits from a data bus (120) and;
   a first multiplexer (145) having a plurality of M inputs coupled to said outputs of said buffers and concatenating said groups of code bits to a bitstream at a plurality of N outputs;
   a second multiplexer (160) having a plurality of N inputs coupled to said N outputs of said first multiplexer and providing clusters with code bits of said first bitstream according to a shift pointer, such that each cluster comprises at least the code bits of one of said code portions; and
   a first decoder (180) having $V_{MAX}$ inputs receiving one cluster at a time, providing said instruction portions of U(p) bits by decoding, and providing said first shift pointer S which corresponds to the number of code bits V(p) of the code portion which has been decoded as part of said cluster.

2. The system of claim 1 wherein $N \geq 2 * L_{MAX} + V_{MAX} - 1$ and $M \geq B * L_{MAX}$.

3. The system of claim 1 wherein said clusters each comprise $V_{MAX}$ code bits.

4. The system of claim 1 wherein some of said clusters comprise code bits belonging to neighboring code portions.

5. The system of claim 1 wherein said first multiplexer receives an indication for L(i) from said data bus.

6. The system of claim 5 wherein said indication for L(i) is a tag bit TAG(i) and indicates either a first group length or a second group length.

7. The system of claim 1 further comprising:

   a second plurality of B' further buffers (150-153) each having $L_{MAX}$ inputs and $L_{MAX}$ outputs, said further buffers consecutively receiving further variable groups G'(i) of $L'(i) \leq L_{MAX}$ further code bits from said data bus;
   a third multiplexer (155) having a plurality of M' inputs coupled to said outputs of said further buffers and concatenating said further groups of code bits to a second bitstream at a plurality of N' outputs;
   a fourth multiplexer (170) having a plurality of N' inputs coupled to said N' outputs of said third multiplexer and providing further clusters with code bits of said second bitstream according to a second shift pointer S', such that each further cluster comprises at least the code bits of one of said further code portions; and
   a second decoder (190) receiving said further clusters, also providing instruction portions by decoding, and providing a second shift pointer S'.

8. The system of claim 7 wherein N' = N, M' = M, and $L(i) + L'(i) = J_{BIT}$ with $J_{BIT}$ being the number of code bits which said data bus can supply simultaneously.

9. The system of claim 7 wherein

   (a) p = 4 code portions p = 1 to p = 4 are converted to p = 4 instruction portions p = 1 to p = 4, respectively;
   (b) groups G(i) comprise code bits of code portions p = 1 and p = 2, further groups G'(i) comprise code bits of code portions p = 3 and p = 4; and

(c) said system uses said first plurality of buffers, said first and second multiplexers, and said first decoder to convert code portions p = 1 to p = 2 and uses said second plurality of buffers, said third and fourth multiplexers, and said second decoder to convert code portions p = 3 and p = 4.

**10.** The system of claim 1 wherein U(p) = U for all p.

**11.** The system of claim 1 further comprising a processor (135) which executes instruction words each having p instruction portions.

**12.** The system of claim 1 further comprising:

a memory (110) storing said groups G(i) and sending said groups G(i) to said data bus; and
a processor (135) receiving said instruction portions without significant delay.

**13.** The system of claim 1 further comprising a memory (110) coupled to said first plurality of said buffers via said data bus and a processor (135) coupled to said first decoder; said memory, said buffers, said first and second multiplexers and said first decoder being integrated into a single semiconductor substrate.

**14.** A data converting method (300) for converting code portions with code bits to instruction portions with instruction bits, said method comprising in repetitions the steps of:

(a) storing (310) groups of code bits in buffers;
(b) concatenating (320) said groups of code bits to a bitstream;
(c) selecting (330) clusters of code bits from said bitstream, wherein each cluster comprises at least one code portion; and
(d) decoding (340) code portions to instruction portions and providing a shift pointer which is recursively used in said selecting step to identify new clusters.

**15.** The method of claim 14 wherein

(a) said groups each comprise a predefined number of code bits;
(b) in said storing step, code bits which do not belong to a given group are also stored in said buffers and
(c) in said concatenating step only the code bits which belong to a predetermined group are concatenated.

**16.** The method of claim 14 wherein said code portions and said instruction portions are related by Huffman coding.

**17.** The method of claim 14 for converting a code portion p having $V_{MIN} \leq V(p) \leq V_{MAX}$ code bits to a corresponding instruction portion p having U(p) instruction bits, wherein:

said step of storing comprises distributing groups G(i) of $L(i) \leq L_{MAX}$ code bits to a plurality of B buffers identified by index b, wherein each group G(i) comprises a code portion p or a further code portion p+1, and buffer b = $(mod_B\ i)$ stores at least a single group G(i);
said step of concatening comprises combining the L(i) code bits of group G(i) with the L(i+1) code bits of group G(i+1) to form a bitstream; and
said steps of selecting and decoding comprise sending clusters of $V_{MAX}$ code bits which comprise the code bits of code portion p from said bitstream to a decoder which provides the instruction portion p.

**18.** The method of claim 17 wherein some code portions have code bits located in groups G(i) and G(i+1).

**19.** The method of claim 17 wherein said distributing, combining, and sending steps are performed cyclically and in a pipeline.

**20.** The method of claim 17 wherein in said sending step, said clusters are cyclically modified by disregarding S old code bits and adding S new code bits, with S = V(p-1) being the number of code bits of a previous code portion p-1.

**Patentansprüche**

1.  System (100), welches durch einen Index p identifizierte Codebereiche, von denen jeder eine variable Anzahl V $(p) \leq V_{MAX}$ von Codebits aufweist, in entsprechende durch einen Index p identifizierte Instruktionsbereiche umwandelt, von denen jeder U(p) Instruktionsbits aufweist, wobei das System umfasst:

    eine erste Mehrzahl von B Puffern (140-143), von denen jeder $L_{MAX}$ Eingänge und $L_{MAX}$ Ausgänge aufweist, wobei die Puffer aufeinanderfolgende Gruppen variabler Länge G(i) mit $L(i) \leq L_{MAX}$ Codebits von einem Datenbus (120) empfangen und;

    einen ersten Multiplexer (145) mit einer Mehrzahl von M mit den Ausgängen der Puffer gekoppelten Eingängen, welcher die Gruppen von Codebits bei einer Mehrzahl von N Ausgängen zu einem Bitstrom verknüpft;

    einen zweiten Multiplexer (160) mit einer Mehrzahl von N mit den N Ausgängen des ersten Multiplexers gekoppelten Eingängen, welcher Cluster mit Codebits des ersten Bitstroms gemäß einem Verschiebungspointer bereitstellt, so dass jeder Cluster wenigstens die Codebits eines der Codebereiche enthält; und

    einen ersten Decoder (180) mit $V_{MAX}$ zu einer Zeit einen Cluster empfangenden Eingängen, der durch Decodieren die Instruktionsbereiche von U(p) Bits bereitstellt und der den ersten Verschiebungspointer S bereitstellt, welcher der Anzahl von Codebits V(p) desjenigen Codebereichs entspricht, der als Teil des Clusters decodiert wurde.

2.  System nach Anspruch 1, wobei $N \geq 2*L_{MAX}+V_{MAX}-1$ und $M \geq B*L_{MAX}$.

3.  System nach Anspruch 1, wobei die Cluster jeweils $V_{MAX}$ Codebits aufweisen.

4.  System nach Anspruch 1, wobei einige der Cluster Codebits enthalten, welche zu benachbarten Codebereichen gehören.

5.  System nach Anspruch 1, wobei der erste Multiplexer von dem Datenbus eine Angabe für L(i) empfängt.

6.  System nach Anspruch 5, wobei die Angabe für L(i) ein Etikettenbit TAG(i) ist und entweder eine erste Gruppenlänge oder eine zweite Gruppenlänge angibt.

7.  System nach Anspruch 1, weiter umfassend:

    eine zweite Mehrzahl von B' weiteren Puffern (150-153) mit jeweils $L_{MAX}$ Eingängen und $L_{MAX}$ Ausgängen,

    wobei die weiteren Puffer aufeinanderfolgend weitere variable Gruppen G'(i) von $L'(i) \leq L_{MAX}$ weiteren Codebits von dem Datenbus empfangen;

    einen dritten Multiplexer (155) mit einer Mehrzahl von M' mit den Ausgängen der weiteren Puffer gekoppelten Eingängen, welcher die weiteren Gruppen von Codebits bei einer Mehrzahl von N' Ausgängen zu einem zweiten Bitstrom verknüpft;

    einen vierten Multiplexer (170) mit einer Mehrzahl von N' mit den N' Ausgängen des dritten Multiplexers gekoppelten Eingängen, welcher weitere Cluster mit Codebits des zweiten Bitstrom gemäß einem zweiten Verschiebungspointer S' bereitstellt, so dass jeder weitere Cluster wenigstens die Codebits eines der weiteren Codebereiche enthält; und

    einen zweiten, die weiteren Cluster empfangenden Decoder (190), der ebenfalls durch Decodieren Instruktionsbereiche bereitstellt und der einen zweiten Verschiebungspointers S' bereitstellt.

8.  System nach Anspruch 7, wobei N'=N, M'=M und $L(i)+L'(i)=J_{BIT}$, wobei $J_{BIT}$ die Anzahl von Codebits ist, welche der Datenbus simultan liefern kann.

9.  System nach Anspruch 7, wobei

    (a) p=4 Codebereiche p=1 bis p=4 in p=4 Instruktionsbereiche p=1 bis p=4 entsprechend umgewandelt werden;

    (b) Gruppen G(i) Codebits von Codebereichen p=1 und p=2 umfassen, weitere Gruppen G'(i) Codebits von Codebereichen p=3 und p=4 umfassen; und

    (c) das System die erste Mehrzahl von Puffern, die ersten und zweiten Multiplexer und den ersten Decoder verwendet, um Codebereiche p=1 bis p=2 umzuwandeln und die zweite Mehrzahl von Puffern, die dritten und vierten Multiplexer und den zweiten Decoder verwendet, um Codebereiche p=3 und p=4 umzuwandeln.

**10.** System nach Anspruch 1, wobei U(p)=U für alle p.

**11.** System nach Anspruch 1, weiter umfassend einen Prozessor (135), welcher Instruktionsworte ausführt, von denen jedes p Instruktionsbereiche aufweist.

**12.** System nach Anspruch 1, weiter umfassend:

einen Speicher (110), welcher die Gruppen G(i) speichert und die Gruppen G(i) an den Datenbus sendet; und
einen Prozessor (135), welcher die Instruktionsbereiche ohne signifikante Verzögerung empfängt.

**13.** System nach Anspruch 1, weiter einen über den Datenbus mit der ersten Mehrzahl der Puffer gekoppelten Speicher (110) und einen mit dem ersten Decoder gekoppelten Prozessor (135) umfassend, wobei der Speicher, die Puffer, die ersten und zweiten Multiplexer und der erste Decoder in ein einziges Halbleitersubstrat integriert sind.

**14.** Datenumwandlungsverfahren (300) zum Umwandeln von Codebereichen mit Codebits in Instruktionsbereiche mit Instruktionsbits, wobei das Verfahren in Wiederholung die Schritte umfasst:

(a) Speichern (310) von Gruppen von Codebits in Puffern;
(b) Verknüpfen (320) der Gruppen von Codebits zu einem Bitstrom;
(c) Auswählen (330) von Clustern von Codebits aus dem Bitstrom, wobei jeder Cluster wenigstens einen Codebereich enthält; und
(d) Decodieren (340) von Codebereichen in Instruktionsbereiche und Bereitstellen eines Verschiebungspointers, welcher in dem Auswahlschritt rekursiv benutzt wird, um neue Cluster zu identifizieren.

**15.** Verfahren nach Anspruch 14, wobei

(a) die Gruppen jeweils eine vordefinierte Anzahl von Codebits umfassen;
(b) in dem Speicherschritt Codebits, welche nicht zu einer gegebenen Gruppe gehören, ebenfalls in den Puffern gespeichert werden; und
(c) in dem Verknüpfungsschritt lediglich diejenigen Codebits, die zu einer vorbestimmten Gruppe gehören, verknüpft werden.

**16.** Verfahren nach Anspruch 14, wobei die Codebereiche mit den Instruktionsbereichen durch Huffman-Codierung in Beziehung stehen.

**17.** Verfahren nach Anspruch 14, zum Umwandeln eines Codebereichs p mit
$V_{MIN} \leq V(p) \leq V_{MAX}$ Codebits in einen entsprechenden Instruktionsbereich p mit U(p) Instruktionsbits, wobei:

der Speicherschritt ein Verteilen von Gruppen G(i) von $L(i) \leq L_{MAX}$ Codebits an eine Mehrzahl von B durch einen Index b identifizierte Puffer umfasst, wobei jede Gruppe G(i) einen Codebereich p oder einen weiteren Codebereich p+1 umfasst und Puffer b=(mod$_B$ i) wenigstens eine einzelne Gruppe G(i) speichert;
der Verknüpfungsschritt ein Kombinieren der L(i) Codebits von Gruppe G(i) mit den L(i+1) Codebits von G(i+1) umfasst, um einen Bitstrom zu bilden; und
die Auswahl- und Decodierschritte ein Senden von Clustern von $V_{MAX}$ Codebits, welche die Codebits von Codebereich p aus dem Bitstrom enthalten, an einen Decoder umfasst, welcher den Instruktionsbereich p liefert.

**18.** Verfahren nach Anspruch 17, wobei einige Codebereiche Codebits aufweisen, die in Gruppen G(i) und G(i+1) angeordnet sind.

**19.** Verfahren nach Anspruch 17, wobei die Verteil-, Kombinier- und Sendeschritte zyklisch und in einer Pipeline ausgeführt werden.

**20.** Verfahren nach Anspruch 17, wobei in dem Sendeschritt die Cluster zyklisch modifiziert werden, indem S alte Codebits nicht beachtet und S neue Codebits hinzugefügt werden, wobei S=V(p-1) die Anzahl von Codebits eines vorangehenden Codebereichs p-1 ist.

**Revendications**

1. Système (100) qui convertit des parties de code identifiées par l'indice p, ayant chacune un nombre de variables $V(p) \leq V_{MAX}$ de bits de code, en des parties d'instruction correspondantes identifiées par l'indice p, ayant chacune $U(p)$ bits d'instruction, ledit système comprenant :

   une première pluralité de B tampons (140 - 143), ayant chacun $L_{MAX}$ entrées et $L_{MAX}$ sorties, lesdits tampons recevant de manière consécutive, en provenance d'un bus de données (120), des groupes $G(i)$ de longueurs variables, ayant $L(i) \leq L_{MAX}$ bits de code ; et

   un premier multiplexeur (145) ayant une pluralité de M entrées couplées auxdites sorties desdits tampons, et concaténant lesdits groupes de bits de code en un train de bits au niveau d'une pluralité de N sorties ;

   un deuxième multiplexeur (160) ayant une pluralité de N entrées couplées auxdites N sorties dudit premier multiplexeur, et formant des blocs avec les bits de code dudit premier train de bits, en fonction d'un pointeur de décalage, de telle sorte que chaque bloc comprenne au moins les bits de code de l'une desdites parties de code ; et

   un premier décodeur (180) ayant $V_{MAX}$ entrées recevant un bloc à la fois, produisant lesdites parties d'instruction de $U(p)$ bits par décodage, et produisant ledit premier pointeur de décalage S qui correspond au nombre de bits de code $V(p)$ de la partie de code qui a été décodée en tant que partie dudit bloc.

2. Système selon la revendication 1, dans lequel $N \geq 2 * L_{MAX} + V_{MAX} - 1$ et $M \geq B * L_{MAX}$.

3. Système selon la revendication 1, dans lequel lesdits blocs comprennent chacun $V_{MAX}$ bits de code.

4. Système selon la revendication 1, dans lequel certains desdits blocs comprennent des bits de code appartenant à des parties de code voisines.

5. Système selon la revendication 1, dans lequel ledit premier multiplexeur reçoit une indication concernant $L(i)$ en provenance dudit bus de données.

6. Système selon la revendication 5, dans lequel ladite indication concernant $L(i)$ est un bit d'étiquette $TAG(i)$ et indique une première longueur de groupe ou bien une deuxième longueur de groupe.

7. Système selon la revendication 1, comprenant, en outre :

   une deuxième pluralité de B' autres tampons (150 - 153), ayant chacun $L_{MAX}$ entrées et $L_{MAx}$ sorties ;

   lesdits autres tampons recevant de manière consécutive, en provenance dudit bus de données, d'autres groupes $G'(i)$ de longueurs variables, ayant $L'(i) \leq L_{MAX}$ autres bits de code ;

   un troisième multiplexeur (155) ayant une pluralité de M' entrées couplées auxdites sorties desdits autres tampons, et concaténant lesdits autres groupes de bits de code en un deuxième train de bits au niveau d'une pluralité de N' sorties ;

   un quatrième multiplexeur (170) ayant une pluralité de N' entrées couplées auxdites N' sorties dudit troisième multiplexeur et formant d'autres blocs avec les bits de code dudit deuxième train de bits, en fonction d'un deuxième pointeur de décalage S', de telle sorte que chaque autre bloc comprenne au moins les bits de code de l'une desdites autres parties de code ; et

   un deuxième décodeur (190) recevant lesdits autres blocs, et produisant également des parties d'instruction par décodage, ainsi qu'un deuxième pointeur de décalage S'.

8. Système selon la revendication 7, dans lequel N' = N, M' = M, et $L(i) + L'(i) = J_{BIT}$, où $J_{BIT}$ est le nombre de bits de code que ledit bus de données peut transporter simultanément.

9. Système selon la revendication 7, dans lequel

(a) p = 4 parties de code p = 1 à p = 4 sont respectivement converties en p = 4 parties d'instruction p = 1 à p = 4 ;

(b) les groupes G(i) comprennent les bits de codes des parties de code p = 1 et p = 2, les autres groupes G'(i) comprennent les bits de codes des parties de code p = 3 et p = 4 ; et

(c) ledit système utilise ladite première pluralité de tampons, lesdits premier et deuxième multiplexeurs, et ledit premier décodeur pour convertir les parties de code p = 1 à p = 2, et il utilise ladite deuxième pluralité de tampons, lesdits troisième et quatrième multiplexeurs, et ledit deuxième décodeur pour convertir les parties de code p = 3 à p = 4.

10. Système selon la revendication 1, dans lequel U(p) = U pour tous les p.

11. Système selon la revendication 1, comprenant, en outre, un processeur (135) qui exécute des mots d'instruction ayant chacun p parties d'instruction.

12. Système selon la revendication 1, comprenant, en outre :

une mémoire (110) stockant lesdits groupes G(i) et envoyant lesdits groupes G(i) audit bus de données ; et

un processeur (135) recevant lesdites parties d'instruction sans un retard considérable.

13. Système selon la revendication 1, comprenant, en outre, une mémoire (110) couplée à ladite première pluralité desdits tampons via ledit bus de données, et un processeur (135) couplé audit premier décodeur ; ladite mémoire, lesdits tampons, lesdits premier et deuxième multiplexeurs et ledit premier décodeur étant intégrés sur un seul substrat semiconducteur.

14. Procédé de conversion de données (300) pour convertir des parties de code ayant des bits de code en parties d'instruction ayant des bits d'instruction, ledit procédé comprenant, en répétition, les étapes qui consistent à :

(a) stocker (310) des groupes de bits de code dans des tampons ;

(b) concaténer (320) lesdits groupes de bits de code en un train de bits ;

(c) sélectionner (330) des blocs de bits de code dans ledit train de bits, chaque bloc comprenant au moins une partie de code ; et

(d) décoder (340) les parties de code en parties d'instruction, et produire un pointeur de décalage qui est utilisé d'une manière récursive dans ladite étape de sélection pour identifier de nouveaux blocs.

15. Procédé selon la revendication 14, dans lequel :

(a) lesdits groupes comprennent chacun un nombre prédéfini de bits de code ;

(b) dans ladite étape de stockage, les bits de code qui n'appartiennent pas à un groupe donné sont également stockés dans lesdits tampons ; et

(c) dans ladite étape de concaténation, seuls les bits de code qui appartiennent à un groupe prédéterminé sont concaténés.

16. Procédé selon la revendication 14, dans lequel lesdites parties de code et lesdites parties d'instruction sont associées par un codage de Huffman.

17. Procédé selon la revendication 14 pour convertir une partie de code p, ayant $V_{MIN} \leq V(p) \leq V_{MAX}$ bits de code, en une partie d'instruction p correspondante, ayant U(p) bits d'instruction, dans lequel :

ladite étape de stockage comprend la distribution des groupes G(i) de $L(i) \leq L_{MAX}$ bits de code vers une pluralité de B tampons identifiés par l'indice b, où chaque groupes G(i) comprend une partie de code p ou un autre partie de code p+1, et le tampon b = $(mod_B$ i) stocke au moins un unique groupe G(i) ;

ladite étape de concaténation comprend la combinaison des L(i) bits de code du groupe G(i) avec les L(i+1) bits de code du groupe G(i+1) pour former un train de bits ; et

lesdites étapes de sélection et de décodage comprennent l'envoi de blocs de $V_{MAX}$ bits de code, qui comprennent les bits de code de la partie de code p dudit train de bits, à un décodeur qui produit la partie d'instruction p.

**18.** Procédé selon la revendication 17, dans lequel certaines parties de code ont des bits de code situés dans les groupes G(i) et G(i+1).

**19.** Procédé selon la revendication 17, dans lequel lesdites étapes de distribution, combinaison et envoi sont exécutées d'une manière cyclique, et dans une architecture pipeline.

**20.** Procédé selon la revendication 17, dans lequel, dans ladite étape d'envoi, lesdits blocs sont modifiés d'une manière cyclique par le fait de ne plus tenir compte de S vieux bits de code et d'ajouter S nouveaux bits de code, où S = V(p-1) est le nombre de bits de code d'une partie de code précédente p-1.

FIG. 1

EP 0 945 782 B1

**210 INSTRUCTION WORD**

u=0        u=7   0            7   0           7   0             7

| ① ① ① ① ① ① ① ① | ② ② ② ② ② ② ② ② | ③ ③ ③ ③ ③ ③ ③ ③ | ④ ④ ④ ④ ④ ④ ④ ④ |

INSTRUCTION PORTION
212@1          212@2          212@3          212@4

231

241      242
CODING   DECODING

230    232

① ① ①    ② ② ② ② ② ② ② ② ② ② ② ②    ③ ③ ③ ③    ④ ④ ④

CODE PORTION
222@1       222@2        222@3       222@4

**220 CODE WORD**

FIG. 2

FIG. 3

FIG. 4

EP 0 945 782 B1

FIG. 5

FIG. 6

250

0 1 2 | 3 4 5 6 7 8 9 10 11 | 12 13 14 | 15 16 17 18 19 | 20 21 22 23 | 24 25 26 | 27 28 29

260@1

260@2

S = 3    S = 12

260@1

S = 5

260@2

EP 0 945 782 B1